# EUROPÄISCHE PATENTSCHRIFT

(11) **EP 1 444 088 B1**
(45) Veröffentlichungstag und Bekanntmachung des Hinweises auf die Patenterteilung: **23.02.2005**
(21) Anmeldenummer: 02801867.9
(22) Anmeldetag: 11.09.2002
(51) Int. Cl.: B29C 65/18, B65B 9/08, B29C 65/74, B31B 1/64

(54) **VORRICHTUNG ZUM SCHWEISSEN VON KUNSTSTOFFFOLIEN**
DEVICE FOR WELDING PLASTIC FILMS
DISPOSITIF DE SOUDAGE DE FILMS PLASTIQUES

(30) Priorität: 23.10.2001 DE 10151576
(43) Veröffentlichungstag der Anmeldung: 11.08.2004
(73) Patentinhaber: LEMO Maschinenbau GmbH, D-53859 Niederkassel-Mondorf (DE)
(72) Erfinder: MEYER, Armin, 51143 Köln (DE); SCHNEIDER, Jakob, 53859 Niederkassel (DE)
(74) Vertreter: Thul, Hermann, Dipl.-Phys.
(86) Internationale Anmeldenummer: PCT/EP2002/010177
(87) Internationale Veröffentlichungsnummer: WO 2003/035372

(56) Entgegenhaltungen:
- DE-A- 2 141 045
- DE-A- 19 910 598

## Beschreibung

### Technisches Gebiet

Die Erfindung betrifft eine Vorrichtung zum Querschweißen oder zum Quertrennschweißen bei der Herstellung von Beuteln, Taschen und dergleichen aus Kunststoffolien auf einer Beutelherstellungsmaschine, gemäß dem Oberbegriff des Anspruches 1.

### Stand der Technik

Aus der Praxis sind Maschinen zum Querschweißen oder zum Quertrennschweißen von Kunststoffolien bekannt. Hierbei werden mindestens zwei übereinander liegende Folien miteinander verschweißt. Obwohl es sich dabei um eine einzige Folie handeln kann, die in Längsrichtung gefaltet ist und dadurch doppelt liegt, wird nachfolgend immer von mindestens zwei Kunststoffolien gesprochen.

Teilweise werden aber auch noch zusätzliche Folien während des Schweißens mit verschweißt, so daß drei Folien oder mehr während eines Schweißvorganges übereinander liegen können.

Erfolgt eine Schweißnaht quer zur Laufrichtung der Kunststoffolien, so spricht man vom Querschweißen. Ist mit dem Querschweißen auch gleichzeitig ein Abtrennen eines Beutels oder einer Tasche, so handelt es sich bei diesem Schweißvorgang um ein Quertrennschweißen.

In der Schrift DE 199 10 598 A1 wird ebenfalls das Querschweißen, insbesondere Quertrennschweißen, beschrieben. Die Schweißvorrichtung besteht im wesentlichen aus einem beheizten Schweißbalken und einer Schweißwalze. Die zu verschweißenden Folien befinden sind zwischen der Schweißwalze und dem Schweißbaren. Zum Schweißen wird der Schweißbalken gegen die Schweißwalze gepreßt. Die Schweißwalze ist vorzugsweise gummiummantelt.

Da es beim Schweißen von Kunststoffolien zum Verkleben des erhitzten Kunststoffes mit der Schweißwalze kommen kann und dadurch der verschweißte Beutel und/oder die Kunststoffolien an der Schweißwalze hängen bleiben können, kann es zu Störungen des Herstellungsvorganges kommen. Deshalb ist die Schweißwalze an ihrer Oberfläche mit PTFE (Teflon) beschichtet. PTFE hat nicht nur eine gute Gleitfähigkeit, sondern auch eine geringe Haftung. Deshalb bleiben auch keine Kunststoffe, selbst wenn sie beim Schweißen erhitzt werden, auf dem PTFE haften.

Wird nun der beheizte Schweißbalken während des Schweißvorganges auf die Kunststoffolien abgesenkt, so drückt sich seine Schweißkante auch etwas in die PTFE-Auflage und in die darunter liegende Gummiummantelung (beispielsweise aus Silicon) hinein. Entfernt sich nach dem Schweißvorgang der Schweißbalken wieder von der Schweißwalze, so federn die Gummiummantelung und die PTFE-Auflage wieder zurück.

Es hat sich aber gezeigt, daß im Laufe der Zeit die PTFE-Auflage Falten aufweist. Dadurch kommt es zum Nachlassen der Qualität der Schweißnaht und der Reduzierung der Standzeit des Schweißbalkens. Wegen der Faltenbildung des PTFE muß die aufgeklebte PTFE-Auflage relativ häufig abgelöst und durch eine neue ersetzt werden. Dieses führt zu Produktionsstörungen, welche mit Kosten verbunden sind.

### Darstellung der Erfindung

Es ist deshalb Aufgabe der Erfindung eine Vorrichtung zum Querschweißen oder zum Quertrennschweißen bereitzustellen, welche die Nachteile aus dem Stand der Technik reduziert oder sogar vermeidet.

Diese Aufgabe wird durch das kennzeichnende Merkmal des Anspruches 1 gelöst. Vorteilhafte Ausgestaltungen ergeben sich aus den Unteransprüchen und der Figurenbeschreibung.

Erfindungsgemäß ist auf der Schweißwalze keine die Schweißwalze einhüllende Auflage vorhanden, sondern es liegt auf der Schweißwalze ein umlaufendes Band auf.

Es hat sich gezeigt, daß dadurch die Faltenbildung reduziert und die Qualität der Schweißnähte verbessert wird. Zusätzlich ist vorteilhaft, daß das erfindungsgemäße Band nicht so häufig gewechselt werden muß wie die einhüllende Auflage beim Stand der Technik.

Vorteilhaft ist es, wenn das Band zumindest an seiner äußeren Oberfläche aus PTFE (Teflon) besteht. Dadurch löst sich der erhitzte Kunststoff leicht ab, oder er haftet erst gar nicht an dem Band an.

Da die Schweißwalze an ihrem äußeren Durchmesser mit einer Gummi-/Silicon-Ummantelung versehen ist und da gerade der äußere Durchmesser zur Steifigkeit beiträgt, kann es der Schweißwalze bei größeren Arbeitsbreiten an Biegefestigkeit fehlen. Der innere, metallene Kern der Schweißwalze trägt dann nicht ausreichend zur erforderlichen Biegesteifigkeit bei. Durch den Schweißdruck des Schweißbalkens auf die Schweißwalze kann es dann zu einem nichtparallelen Schweißspalt kommen. In einer vorteilhaften Ausgestaltung der Erfindung wird die Schweißwalze, auf der dem Preßspalt abgewandten Seite, durch eine Stützrolle gestützt. Dadurch wird einer möglichen Durchbiegung der Schweißwalze entgegen gewirkt.

Die Schweißwalze und die Spannwalze werden stimseitig in Lagerplatten gelagert und geführt. Damit diese Lagerplatten zueinander eine definierte, parallele Position beibehalten, sind sie über eine Traverse miteinander verbunden. Die Traverse ist in der Schlaufe des Bandes angeordnet, welches den Vorteil hat, daß der vorhandene Raum in der Schlaufe ausgenutzt wird.

Eine vorteilhafte Ausgestaltung der Erfindung ist auch das Anordnen einer Spannwalze in der Schlaufe des Bandes, wobei die Spannwalze im wesentlichen achsparallel zur Schweißwalze angeordnet ist. Diese Spannwalze hält das Band straff, wodurch sich keine Falten oder Unebenheiten im Band ausbilden können. Außerdem wird das Band durch die Spannwalze sicher geführt.

Um das Band auch bei einer Zunahme seiner Länge in Umfangsrichtung noch straff zu halten, ist es vorteilhaft, wenn die Spannwalze federnd gespannt wird.

### Kurze Beschreibung der Zeichnung

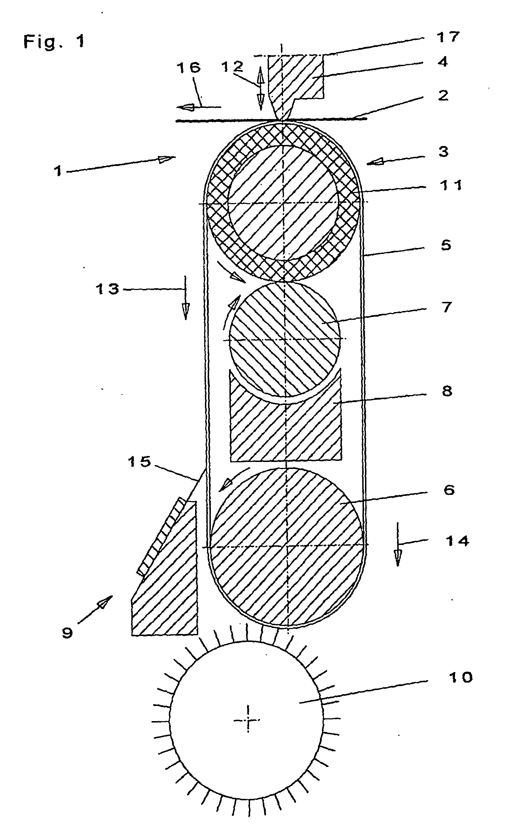

Nachfolgend soll nun die Erfindung anhand der Figur 1 näher erläutert werden. Es zeigt:
- Figur 1: einen Querschnitt durch ein Schweißwerkzeug.

### Wege zur Ausführung der Erfindung

In der Figur 1 ist eine Schweißvorrichtung 1 für das Querschweißen oder zum Quertrenn-schweißen zu sehen. Ein Schweißbalken 4 und eine Schweißwalze 3 sind die wesent-lichen Bauteile der Schweißvorrichtung 1. Während des Schweißens sind Kunststoffolien 2 zwischen beiden eingeschlossen. In dem Ausführungsbeispiel führt der Schweißbalken 4 eine Bewegung 12 von oben nach unten und umgekehrt aus. In einer anderen Aus-gestaltung der Erfindung könnte sich die Schweißwalze 3 auch gegen den Schweißbalken 4 bewegen.

Gemäß der Erfindung ist die Schweißwalze 3 von einem Band 5 umschlungen. Das Band 5 liegt auf einer Silicon-Ummantelung 11 der Schweißwalze 3 auf.

Das Band 5 ist endlos und ohne Stoßkante ausgestaltet und bildet deshalb eine Schlaufe. Zum Führen und Spannen des Bandes 5 ist in der Schlaufe eine achsparallele Spann-walze 6 angeordnet. Bevorzugt wird als Band 5 ein Band aus PTFE (Teflon) verwendet, das mit Fasern oder einem Gewebe aus Glas oder Aramid verstärkt ist.

Zum Stützen der Schweißwalze 3 ist auf ihrer dem Schweißbalken 4 abgewandten Seite, eine Stützrolle 7 angeordnet, die in entgegengesetzter Drehrichtung auf der Schweiß-walze 3 abrollt. Die Stützrolle 7 ist wie die Schweißwalze 3 und die Spannwalze 6 in hier nicht dargestellten Lagerplatten gelagert. Durch eine vorgewählte Anpressung der Stütz-rolle 7 gegen die Schweißwalze 3 kann sichergestellt werden, daß beim Andrücken des Schweißbalkens 4 gegen die Schweißwalze 3 der Schweißspalt parallel bleibt.

In der Schlaufe des Bandes 5 ist auch eine Traverse 8 angeordnet. Diese Traverse 8 verbindet die hier nicht dargestellten Lagerplatten. Um der Traverse 8 möglichst viel Steifigkeit zu geben, sind hier die rechte obere und die linke obere Ecke der Traverse 8 nach oben hochgezogen worden. Zur Steigerung der Steifigkeit der Traverse 8 wäre es auch denkbar, daß die linke untere und die rechte untere Ecke nach unten herunter gezogen werden.

Beim Schweißen der Kunststoffolien 2 können Kunststoffreste auf dem Band 5 hängenbleiben. Aus diesem Grunde ist eine Abstreifeinrichtung in der Form einer Abstreifrakel 9 mit einer Rakelklinge 15 dem Band 5 zugeordnet. Die Rakelklinge 15 berührt das Band 5 in seinem ungestützten Bereich, das heißt, daß das Band 5 durch die Anpreßkraft der Rakelklinge 15 nachgeben kann.

Da sich durch mechanische und/oder thermische Beanspruchungen das Band 5 in Umfangsrichtung dehnen kann, wird das Band 5 mittels einer Spannwalze 6 gespannt gehalten. Es ist vorteilhaft, wenn die Lagerstellen der Spannwalze 6 federbelastet ausgebildet sind, beispielsweise durch eine Schraubenfeder oder durch einen Luftzylinder. Dann erübrigt sich ein manuelles Nachspannen der Spannwalze 6 durch Bedienungspersonal.

In der Figur 1 ist dem Band 5 eine Bürsteinrichtung 10 zugeordnet. Diese Bürsteinrichtung 10 ist als Bürstwalze ausgebildet. Durch die Rotation der Bürstwalze werden möglicherweise anhaftende Kunststoffreste besser von der Oberfläche des Bandes 5 entfernt, als wenn die Bürsteinrichtung 10 lediglich aus einem feststehenden Bürstelement bestehen würde.

### Bezugszeichenliste

- 1: Schweißvorrichtung
- 2: Kunststoffolien
- 3: Schweißwalze
- 4: Schweißbalken
- 5: Band
- 6: Spannwalze
- 7: Stützrolle
- 8: Traverse
- 9: Abstreifrakel
- 10: Bürsteinrichtung
- 11: Silicon-Ummantelung
- 12: Bewegung des Schweißbalkens
- 13: Laufrichtung des Bandes
- 14: Spannweg des Bandes
- 15: Rakelklinge
- 16: Bewegungsrichtung der Kunststoffolien
- 17: zeichnerische Abbruchline

## Patentansprüche

1. Vorrichtung zum Querschweißen oder zum Quertrennschweißen von Kunststoffolien (2) für eine Maschine zur Herstellung von Beuteln, Taschen oder dergleichen, mit einer Schweißwalze (3) und einem beheizten Schweißbalken (4), die gegeneinander bewegbar sind und zwischen denen die Kunststoffolien (2) zum Verschweißen hindurchgeführt werden, **dadurch gekennzeichnet, daß** die Schweißwalze (3) von einem umlaufenden Band (5) abgedeckt wird.

2. Vorrichtung nach Anspruch 1, **dadurch gekennzeichnet, daß** zumindest die äußere Oberfläche des Bandes (5) aus PTFE (Teflon) ist.

3. Vorrichtung nach Anspruch 2, **dadurch gekennzeichnet, daß** das Band (5) aus PTFE (Teflon) hergestellt ist, das mit Fasern oder Gewebe aus Glas oder Aramid verstärkt ist.

4. Vorrichtung nach einem der Ansprüche 1 bis 3, **dadurch gekennzeichnet, daß** die Schweißwalze (3) auf der dem Schweißbalken (4) abgewandten Seite durch eine Stützrolle (7) abgestützt wird.

5. Vorrichtung nach einem der Ansprüche 1 bis 4, **dadurch gekennzeichnet, daß** in der von dem Band (5) gebildeten Schlaufe eine Traverse (8) angeordnet ist.

6. Vorrichtung nach einem der Ansprüche 1 bis 5, **dadurch gekennzeichnet, daß** eine Abstreifrakel (9) an der äußeren Oberfläche des Bandes (5) anliegt.

7. Vorrichtung nach einem der Ansprüche 1 bis 6, **dadurch gekennzeichnet, daß** das Band (5) nicht nur über die Schweißwalze (3), sondern auch noch über eine Spannwalze (6) läuft.

8. Vorrichtung nach Anspruch 7, **dadurch gekennzeichnet, daß** auf die Spannwalze (6) federbelastet ausgestaltet ist.

9. Vorrichtung nach einem der Ansprüche 1 bis 8, **dadurch gekennzeichnet, daß** dem Band (5) eine Bürsteinrichtung (10) zugeordnet ist.

10. Vorrichtung nach Anspruch 9, **dadurch gekennzeichnet, daß** die Bürsteinrichtung (10) als rotierende Bürstwalze ausgebildet ist.

## Claims

1. Device for cross-welding or cross-separating-welding plastic films (2) for a machine for producing bags or the like, with a welding roller (3) and a heated welding terminal (4), which can be moved towards each other and between which the plastic films (2) are brought for welding, **characterized in that** the welding roller (3) is covered by a continuous belt (5).

2. Device according to Claim 1, **characterized in that** at least the outer surface of the belt (5) is made of PTFE (Teflon).

3. Device according to Claim 2, **characterized in that** the belt (5) is produced from PTFE (Teflon) which is reinforced with glass or aramid fibres or fabric.

4. Device according to one of Claims 1 to 3, **characterized in that** the welding roller (3) is supported on the side facing away from the welding terminal (4) by a supporting roller (7).

5. Device according to one of Claims 1 to 4, **characterized in that** a cross-beam (8) is arranged in the loop formed by the belt (5).

6. Device according to one of Claims 1 to 5, **characterized in that** a stripping blade (9) bears against the outer surface of the belt (5).

7. Device according to one of Claims 1 to 6, **characterized in that** the belt (5) runs not only over the welding roller (3), but also over a tension roller (6).

8. Device according to Claim 7, **characterized in that** the tension roller (6) is of a spring-loaded design.

9. Device according to one of Claims 1 to 8, **characterized in that** the belt (5) is assigned a brush device (10).

10. Device according to Claim 9, **characterized in that** the brush device (10) is formed as a rotating brush roller.

## Revendications

1. Dispositif de soudage transversal ou de soudage transversal de découpe de films en matière plastique (2) pour machine de fabrication de sachets, sacs ou similaires, comprenant un cylindre de soudage (3) et une barre de soudage chauffée (4) qui sont mobiles l'un par rapport à l'autre et entre lesquels sont guidés les films en matière plastique (2) à souder, **caractérisé en ce que** le cylindre de soudage (3) est recouvert par une bande périphérique (5).

2. Dispositif selon la revendication 1, **caractérisé en ce qu'**au moins la surface extérieure de la bande (5) est en PTFE (téflon).

3. Dispositif selon la revendication 2, **caractérisé en ce que** la bande (5) est fabriquée en PTFE (téflon) qui est renforcé par des fibres ou de la toile de verre ou d'aramide.

4. Dispositif selon l'une quelconque des revendications 1 à 3, **caractérisé en ce que** le cylindre de soudage (3) s'appuie sur le côté détourné de la barre de soudage (4) par un rouleau d'appui (7).

5. Dispositif selon l'une quelconque des revendications 1 à 4, **caractérisé en ce que**, dans la boucle formée par la bande (5), est disposée une traverse (8).

6. Dispositif selon l'une quelconque des revendications 1 à 5, **caractérisé en ce qu'**un racloir (9) repose sur la surface extérieure de la bande (5).

7. Dispositif selon l'une quelconque des revendications 1 à 6, **caractérisé en ce que** la bande (5) ne passe pas seulement sur le rouleau de soudage (3), mais aussi sur un rouleau de tension (6).

8. Dispositif selon la revendication 7, **caractérisé en ce que** le rouleau de tension (6) est conçu de manière à être chargé par ressort.

9. Dispositif selon l'une quelconque des revendications 1 à 8, **caractérisé en ce qu'**à la bande (5) est associé un système de brosse (10).

10. Dispositif selon la revendication 9, **caractérisé en ce que** le système de brosse (10) est conçu sous forme d'un cylindre à brosse rotatif.
